# EUROPÄISCHE PATENTSCHRIFT

(11) **EP 3 179 893 B1**
(45) Veröffentlichungstag und Bekanntmachung des Hinweises auf die Patenterteilung: **18.04.2018**
(21) Anmeldenummer: 15748051.8
(22) Anmeldetag: 11.08.2015
(51) Int. Cl.: A47J 44/00

(54) **ELEKTRISCHES KÜCHENGERÄT**
ELECTRICAL KITCHEN APPLIANCE
APPAREIL DE CUISINE ÉLECTRIQUE

(30) Priorität: 12.08.2014 DE 102014111508
(43) Veröffentlichungstag der Anmeldung: 21.06.2017
(73) Patentinhaber: Vorwerk & Co. Interholding GmbH, 42275 Wuppertal (DE)
(72) Erfinder: LANG, Torsten, 42657 Solingen (DE); HACKERT, Georg, 44869 Bochum (DE); SCHOMACHER, Jutta, 42489 Wuelfrath (DE); KRAUT-REINKOBER, Stefan, 51375 Leverkusen (DE); SAUERWALD, Andres, 46238 Bottrop (DE)
(74) Vertreter: Müller, Enno
(86) Internationale Anmeldenummer: PCT/EP2015/068455
(87) Internationale Veröffentlichungsnummer: WO 2016/023900

(56) Entgegenhaltungen:
- DE-A1-102009 059 181
- DE-A1-102013 000 839
- DE-U1- 20 200 419

## Beschreibung

Die Erfindung betrifft ein elektrisches Küchengerät zur Herstellung von Speisen, mit einer Bedieneinheit zur Eingabe von Steuerbefehlen zum Steuern des elektrischen Küchengeräts durch einen Benutzer, wobei die Bedieneinheit (3) an dem elektrischen Küchengerät (1) lösbar anbringbar und dabei in einem ersten Betriebsmodus und in einem zweiten Betriebsmodus betreibbar ist, wobei die Bedieneinheit (3) zur Eingabe von Steuerbefehlen zum Steuern des elektrischen Küchengeräts (1) durch den Benutzer im ersten Betriebsmodus am elektrischen Küchengerät (1) angebracht und im zweiten Betriebsmodus von dem elektrischen Küchengerät (1) abgenommen ist. Siehe die Druckschrift DE 10 2013 000839 A1. Derartige elektrische Küchengeräte sind z.B. in Form von universellen Küchenmaschi nen bekannt, die neben einem mechanischen Verarbeiten von Nahrungsmitteln, z.B. mittels eines Rührwerks oder Schneidmessers, auch ein Garen der Nahrungsmittel ermöglichen. Zur Herstellung einer entsprechenden Speise sind häufig vorbestimmte Rezepte vorgesehen, die mehrere aufeinanderfolgende Rezeptschritte aufweisen. Um dem Benutzer eines derartigen elektrischen Küchengeräts das Herstellen einer Speise nach einem derartigen vorbestimmten Rezept zu ermöglichen, aber auch um das elektrische Küchengerät mit seinen Funktionen direkt anzusteuern, weisen derartige Geräte in der Regel eine Bedieneinheit zur Eingabe von Steuerbefehlen zum Steuern des elektrischen Küchengeräts durch den Benutzer auf.
Es ist die Aufgabe der Erfindung, ein derartiges elektrisches Küchengerät bereitzustellen, das eine Bedieneinheit aufweist, die in individueller Weise bedient werden kann.
Diese Aufgabe wird gelöst durch den Gegenstand des Patentanspruchs 1. Bevorzugte Weiterbildungen sind in den Unteransprüchen beschrieben.
Damit wird die Aufgabe der Erfindung durch ein elektrisches Küchengerät zur Herstellung von Speisen gelöst, mit einer Bedieneinheit zur Eingabe von Steuerbefehlen zum Steuern des elektrischen Küchengeräts durch einen Benutzer, wobei die Bedieneinheit an dem elektrischen Küchengerät lösbar anbringbar und dabei in einem ersten Betriebsmodus und in einem zweiten Betriebsmodus betreibbar ist, wobei die Bedieneinheit zur Eingabe von Steuerbefehlen zum Steuern des elektrischen Küchengeräts durch den Benutzer im ersten Betriebsmodus am elektrischen Küchengerät angebracht und im zweiten Betriebsmodus von dem elektrischen Küchengerät abgenommen ist, und wobei die Bedieneinheit (3) im ersten Betriebsmodus einen ersten Funktionsumfang von möglichen Eingaben von Steuerbefehlen zum Steuern des elektrischen Küchengeräts (1) und im zweiten Betriebsmodus einen zweiten Funktionsumfang von möglichen Eingaben von Steuerbefehlen zum Steuern des elektrischen Küchengeräts (1) zur Verfügung stellt, wobei der erste Funktionsumfang von dem zweiten Funktionsumfang verschieden ist.

Es ist damit ein wesentlicher Punkt der Erfindung, eine derartige Bedieneinheit für das elektrische Küchengerät bereitzustellen, die einerseits in einem am elektrischen Küchengerät angebrachten Zustand betreibbar ist und andererseits in einem Zustand, in dem sie von dem elektrischen Küchengerät entfernt ist, also insbesondere körperlich nicht in Kontakt zu dem elektrischen Küchengerät steht. Damit wird es dem Benutzer nämlich ermöglicht, neben einem herkömmlichen Betriebsmodus, bei dem die Bedieneinheit am elektrischen Küchengerät angebracht und damit grundsätzlich Teil des elektrischen Küchengeräts ist, auch einen derartigen Betriebsmodus zu wählen, bei dem das elektrische Küchengerät einerseits und die Bedieneinheit andererseits voneinander getrennt sind.

So kann die Bedieneinheit also im zweiten Betriebsmodus in einem gewissen Abstand vom elektrischen Küchengerät positioniert werden, so dass das elektrische Küchengerät mittels der Bedieneinheit aus der Ferne bedienbar ist. Insbesondere wird damit ein Einsatz ermöglicht, bei dem die Bedieneinheit z.B. neben einem Waschbecken positioniert wird, so dass der Benutzer, der zuvor mit den zu verarbeitenden Speisen hantiert hat, vor der Bedienung der Bedieneinheit seine Hände waschen kann und danach unmittelbar Zugriff auf die Bedieneinheit hat. Nach dem Händewaschen muss er damit nicht erst zum elektrischen Küchengerät zurückkehren, um dieses zu bedienen, sondern kann über die in der Nähe des Waschbeckens positionierte Bedieneinheit umgehend das elektrische Küchengerät ansteuern.

Weiterhin ist die mögliche Trennung der Bedieneinheit vom elektrischen Küchengerät insofern vorteilhaft, als dass die Bedieneinheit auch dort positioniert werden kann, wo z.B. ein Kochbuch oder ein Rezept liegt, das vom Benutzer zur Herstellung einer bestimmten Speise verwendet wird. Wenn der Benutzer also innerhalb seiner Küche zu dem Ort des Kochbuchs, z.B. am Küchentisch, zurückkehrt, kann er dort einzustellende Parameter ablesen, um diese dann über die separat von dem elektrischen Küchengerät vorgesehene Bedieneinheit einzugeben.
Allerdings ist es nicht immer nur vorteilhaft, die Bedieneinheit von dem elektrischen Küchengerät zu trennen. Vielmehr gibt es auch Situationen, in denen bewusst gewünscht ist, dass die Bedieneinheit in der Nähe des Küchengerätes, vorzugsweise in der unmittelbaren Nähe, wie direkt am Küchengerät, vorgesehen ist. Dies kann insbesondere dann der Fall sein, wenn eine verarbeitungskritische Phase bei der Abarbeitung eines Rezeptes erreicht worden ist und z.B. der Verarbeitungszustand der Speise kontinuierlich beobachtet und überwacht werden muss. Dafür muss sich der Benutzer regelmäßig in der unmittelbaren Nähe des elektrischen Küchengeräts aufhalten, wozu er insbesondere gezwungen wird, wenn die Bedieneinheit unmittelbar am elektrischen Küchengerät angebracht ist.
Erfindungsgemäß ist vorgesehen, dass die Betriebseinheit im ersten Betriebsmodus einen ersten Funktionsumfang von möglichen Eingaben von Steuerbefehlen zum Steuern des elektrischen Küchengeräts und im zweiten Betriebsmodus einen zweiten Funktionsumfang von möglichen Eingaben von Steuerbefehlen zum Steuern des elektrischen Küchengeräts zur Verfügung stellt, wobei der erste Funktionsumfang von dem zweiten Funktionsumfang verschieden ist. Dies ermöglicht es, nicht zuletzt unter Sicherheitsaspekten, dass der Funktionsumfang im zweiten Betriebsmodus, also bei von dem elektrischen Küchengerät abgenommener Bedieneinheit, reduziert ist.
Insbesondere können auf diese Weise im zweiten Betriebsmodus derartige Funktionen aus dem Funktionsumfang gestrichen sein, die eine unmittelbare Anwesenheit des Benutzers am elektrischen Küchengerät fordern oder zumindest nahelegen. Dies können Funktionen, wie das Ansteuern eines Schneidwerks sein, die sicherheitskritisch sind und bedingen, dass der Benutzer sicherstellt, dass auch kein Dritter durch den Betrieb des elektrischen Küchengeräts gefährdet wird. Ferner können dies Funktionen sein, die im Rahmen einer derartigen Abarbeitung von Rezeptschritten erfolgen, die eine Beobachtung des Fortschreitens der Verarbeitung der Nahrungsmittel erfordern. Insofern liegt eine bevorzugte Weiterbildung der Erfindung also darin, dass der zweite Funktionsumfang wenigstens eine von dem ersten Funktionsumfang umfasste mögliche Eingabe von Steuerbefehlen zum Steuern des elektrischen Küchengeräts nicht umfasst.

Weiterhin ist es grundsätzlich möglich, dass für den jeweiligen Funktionsumfang nur dahingehend unterschieden wird, ob sich die Bedieneinheit im ersten Betriebsmodus oder im zweiten Betriebsmodus befindet, also am elektrischen Küchengerät angebracht oder von diesem abgenommen ist. Gemäß einer bevorzugten Weiterbildung der Erfindung ist jedoch vorgesehen, dass der zweite Funktionsumfang abhängig von der Größe oder/und der Art des Abstandes der Bedieneinheit von dem elektrischen Küchengerät ist. Insbesondere kann in diesem Zusammenhang vorgesehen sein, dass der Funktionsumfang im zweiten Betriebsmodus noch weiter reduziert ist, wenn sich die Bedieneinheit in einem vorbestimmten größeren Abstand vom elektrischen Küchengerät befindet.

Ganz bevorzugt ist in diesem Zusammenhang vorgesehen, dass der zweite Funktionsumfang in dem Fall geringer ist, in dem zwischen der Betriebseinheit und dem elektrischen Küchengerät keine Sichtverbindung besteht, als in dem Fall, in dem zwischen der Betriebseinheit und dem elektrischen Küchengerät eine Sichtverbindung besteht. Konkret bedeutet dies z.B., dass bei der Mitnahme der Bedieneinheit von dem Benutzer in einen anderen Raum, also heraus aus dem Raum, in dem das elektrische Küchengerät aufgestellt ist, der zugängliche Funktionsumfang, der mittels der Bedieneinheit ansteuerbar ist, weiter reduziert ist. Auf diese Weise können insbesondere Funktionen von ihrer Ansteuermöglichkeit vollständig ausgeklammert werden, wenn diese z.B. aus Sicherheitsaspekten eine unmittelbar Anwesenheit des Benutzers am elektrischen Küchengerät oder zumindest im selben Raum fordern.

Im zweiten Betriebsmodus, also bei von dem elektrischen Küchengerät abgenommener Bedieneinheit, ist für die Datenübertragung zwischen dem elektrischen Küchengerät und der Bedieneinheit vorzugsweise eine Funkverbindung vorgesehen. Das macht die Handhabung der Bedieneinheit im Vergleich mit einem kabelgebundenen Anschluss an das elektrische Küchengerät deutlich einfacher. Unter diesem Aspekt kann es auch für den ersten Betriebsmodus vorgesehen sein, also wenn die Bedieneinheit am elektrischen Küchengerät angebracht ist, dass die Datenübertragung per Funk erfolgt. Gemäß einer bevorzugten Weiterbildung der Erfindung ist jedoch vorgesehen, dass für das elektrische Küchengerät und die Bedieneinheit erste Übertragungseinrichtungen und zweite Übertragungseinrichtungen vorgesehen sind, wobei mit den ersten Übertragungseinrichtungen im ersten Betriebsmodus die Steuerbefehle zum Steuern des elektrischen Küchengeräts kabelgebunden zwischen dem elektrischen Küchengerät und der Bedieneinheit übertragbar sind und im zweiten Betriebsmodus die Steuerbefehle zum Steuern des elektrischen Küchengeräts per Funk zwischen dem elektrischen Küchengerät und der Bedieneinheit übertragbar sind.

Damit ist also gemeint, dass erste Übertragungseinrichtungen zum kabelgebundenen Übertragen von Steuerbefehlen sowohl im elektrischen Küchengerät und in der Bedieneinheit vorgesehen sind, und zwar derart, dass sie miteinander kommunizieren können, und gleichzeitig zweite Übertragungseinrichtungen zur Funkübertragung zwischen dem elektrischen Küchengerät und der Bedieneinheit vorgesehen sind. Vorzugsweise ist bei dieser Ausführungsform der Erfindung ein automatischer Wechsel zwischen kabelgebundener und funkgebundener Übertragung bzw. zurück vorgesehen, wenn die Bedieneinheit von dem elektrischen Küchengerät abgenommen bzw. an diesem wieder angebracht wird.

Grundsätzlich kann das elektrische Küchengerät mit einer Vielzahl von Bedieneinheiten versehen sein. Insbesondere ist es nämlich möglich, dass das elektrische Küchengerät neben der lösbar anbringbaren und damit abnehmbaren Bedieneinheit eine weitere fest an dem elektrischen Küchengerät angebrachte Bedieneinheit aufweist. Gemäß einer bevorzugten Weiterbildung der Erfindung ist jedoch vorgesehen, dass die an dem elektrischen Küchengerät lösbar anbringbare Bedieneinheit die einzige Bedieneinheit des elektrischen Küchengerätes ist. Dies ist nicht nur unter Kostenaspekten sinnvoll, sondern ermöglicht es auch, ohne besonderen Aufwand dem Benutzer immer die gleiche Eingabeschnittstelle zur Verfügung zu stellen, unabhängig davon, ob die Eingabe direkt am elektrischen Küchengerät erfolgt oder aber an der von dem elektrischen Küchengerät abgenommenen Bedieneinheit.

Grundsätzlich ist es ausreichend, wenn die Bedieneinheit, die von dem elektrischen Küchengerät abnehmbar ist, zur Eingabe von Steuerbefehlen zum Steuern des elektrischen Küchengeräts ausgestaltet ist. Gemäß einer bevorzugten Weiterbildung der Erfindung ist die Bedieneinheit jedoch zusätzlich zur Ausgabe von Informationsdaten an den Benutzer vorgesehen. Vorzugsweise werden die Informationsdaten dabei auf demselben Weg übertragen, wie die Steuerbefehle zum Steuern des elektrischen Küchengeräts.

Vorteilhaft ist diese Ausgestaltung insbesondere dann, wenn sich der Benutzer mit der Bedieneinheit in einer derartigen Entfernung vom elektrischen Küchengerät befindet, die ihm keinen direkten Blick bzw. Zugriff mehr auf das elektrische Küchengerät ermöglicht. Unabhängig von der Eingabe von Steuerdaten kann dies auch dann sinnvoll sein, wenn es über die Ausgabe von Informationsdaten an den Benutzer darum geht, diesen über den Ablauf einer vorbestimmten Bearbeitungszeit zu informieren, z.B. wenn die zuzubereitende Speise fertig ist, um diese dann rechtzeitig aus dem elektrischen Küchengerät zu entfernen.

Schließlich ist gemäß einer bevorzugten Weiterbildung der Erfindung vorgesehen, dass die Bedieneinheit einen Druck-/Drehknopf und/oder ein Touch-Display zur Eingabe von Steuerbefehlen bzw. zur Ausgabe von Informationsdaten aufweist.

Im Folgenden wird die Erfindung unter Bezugnahme auf die Zeichnung anhand eines bevorzugten Ausführungsbeispiels der Erfindung näher erläutert. In der Zeichnung zeigt
- Fig. 1: schematisch ein elektrisches Küchengerät mit daran angebrachter Bedieneinheit zur Eingabe von Steuerbefehlen zum Steuern des elektrischen Küchengeräts gemäß einem bevorzugten Ausführungsbeispiel der Erfindung,
- Fig. 2: schematisch das elektrische Küchengerät gemäß dem vorliegend beschriebenen bevorzugten Ausführungsbeispiel der Erfindung mit davon abgenommener Bedieneinheit und
- Fig. 3: schematisch einen Speicher des elektrischen Küchengeräts gemäß dem bevorzugten Ausführungsbeispiel der Erfindung mit darin abgespeicherten Steuerbefehlen.

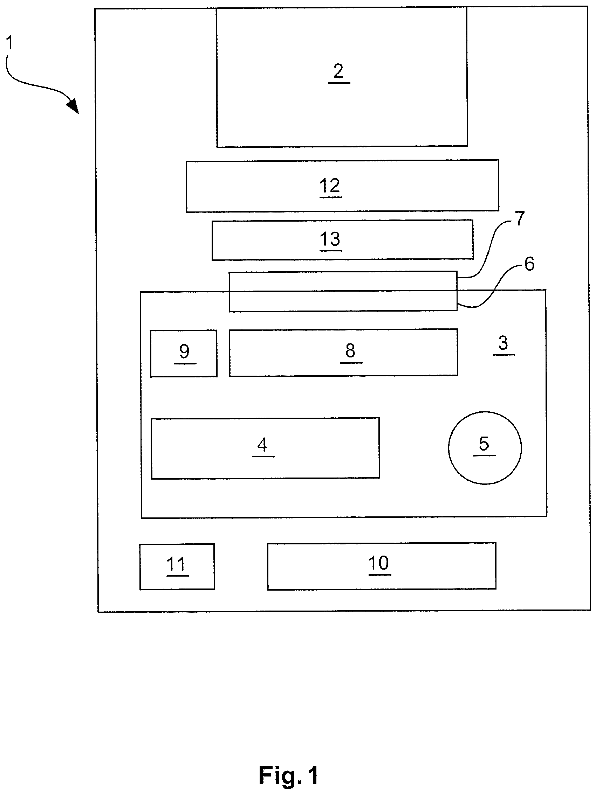

Aus Fig. 1 ist schematisch ein elektrisches Küchengerät 1 zur Herstellung von Speisen gemäß einem bevorzugten Ausführungsbeispiel der Erfindung ersichtlich. Das elektrische Küchengerät 1 weist einen Verarbeitungsraum 2 zur Verarbeitung der Speisen auf. Verarbeitungseinrichtungen innerhalb des Verarbeitungsraums 2, wie eine Heizung, ein Rührwerk oder ein Schneidmesser, sind, weil nicht erfindungsrelevant, nicht im Detail dargestellt.

Weiterhin ist das elektrische Küchengerät 1 mit einer Bedieneinheit 3 versehen, die zur Eingabe von Steuerbefehlen zum Steuern des elektrischen Küchengeräts 1 durch einen Benutzer dient. Diese Bedieneinheit 3 weist ein Touch-Display 4 sowie einen Druck-/Drehknopf 5 auf. Über das Touch-Display 4 und den Druck-/Drehknopf 5 können vom Benutzer des elektrischen Küchengeräts 1 Steuerbefehle zum Steuern des elektrischen Küchengeräts 1 eingegeben werden. Zusätzlich dient das Touch-Display 4 dazu, Informationsdaten an den Benutzer auszugeben.

Die Bedieneinheit 3 ist nun in zwei verschiedenen Betriebsmodi betreibbar, und zwar in einem an dem elektrischen Küchengerät 1 angebrachten Zustand und in einem von diesem abgenommenen Zustand. Fig. 1 zeigt den ersten Betriebsmodus, in dem die Bedieneinheit 3 am elektrischen Küchengerät 1 angebracht ist. Die Übertragung von über die Bedieneinheit 3 eingegebenen Steuerbefehlen erfolgt dabei kabelgebunden, und zwar über die kabelgebundene Übertragungseinrichtung 6 an der Bedieneinheit 3 und die kabelgebundene Übertragungseinrichtung 7 am elektrischen Küchengerät. Diese Übertragungseinrichtungen 6, 7 sind vorliegend als Stecker/Buchse-Kombination ausgeführt.

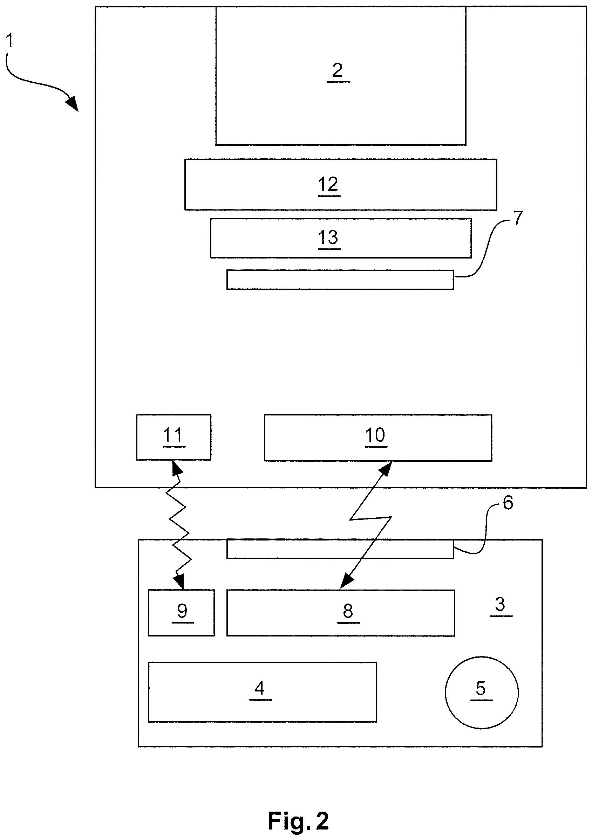

Für eine Funkübertragung von Steuerbefehlen zwischen dem elektrischen Küchengerät 1 und der Bedieneinheit 3, die nachfolgend im Detail unter Bezugnahme auf Fig. 2 erläutert wird, weist die Bedieneinheit 3 eine Funkübertragungseinrichtung 8 sowie eine Infrarot-Schnittstelle 9 auf. Korrespondierend dazu sind im elektrischen Küchengerät 1 eine Funkübertragungseinrichtung 10 sowie eine Infrarotschnittstelle 11 vorgesehen. Steuerbefehle und damit verbundene Funktionen sind im Speicher 12 des elektrischen Küchengeräts 1 abgelegt, und die Steuerung der verschiedenen Einrichtungen des elektrischen Küchengeräts 1 wird von einer zentralen Steuereinheit 13 übernommen. Nicht weiter im Detail dargestellt ist eine Batterie in der Bedieneinheit 3, die über das elektrische Küchengerät 1, nämlich mittels der Verbindung über die kabelgebundene Übertragungseinrichtungen 6, 7 geladen wird, wenn die Bedieneinheit 3 am elektrischen Küchengerät 1 angeordnet ist.

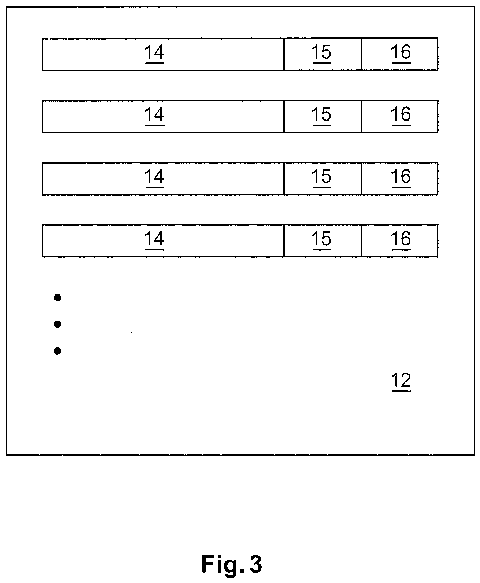

Die Betriebsweise des elektrischen Küchengeräts 1 mit der daran angebrachten Bedieneinheit 3, wie in Fig. 1 gezeigt, ist nun wie folgt:
Über das Touch-Display 4 bzw. den Druck-/Drehknopf 5 eingegebene Steuerbefehle werden über die kabelgebundenen Übertragungseinrichtungen 6, 7 von der Bedieneinheit 3 an die zentrale Steuereinheit 13 des elektrischen Küchengeräts 1 übergeben. Dazu stehen der Bedieneinheit 3 in dem Speicher 12 des elektrischen Küchengeräts 1 abgelegte Steuerbefehle zur Verfügung. Diese werden der zentralen Steuereinheit 13 zugeführt und dort derart umgesetzt, dass es zu einer entsprechenden Ansteuerung der Einrichtungen des elektrischen Küchengerätes kommt. Wie schematisch Fig. 3 entnehmbar, sind dazu im Speicher 12 Steuerinformationen 14 abgelegt, und zwar jeweils mit einer ersten Zusatzinformation 15 und einer zweiten Zusatzinformation 16.

Während im Betriebsmodus, in dem die Bedieneinheit 3 am elektrischen Küchengerät 1 angebracht ist, wie in Fig. 1 dargestellt, alle durch die Steuerinformationen 14 gegebenen Steuerbefehle aus dem Speicher 2 zur Verfügung stehen, ist dieser Funktionsumfang in dem in Fig. 2 dargestellten Betriebsmodus, bei dem die Bedieneinheit 3 vom elektrischen Küchengerät 1 abgenommen ist, reduziert. Dazu gibt nämlich die jeweilige erste Zusatzinformation 15 zu einer Steuerinformation 14 an, ob die jeweilige Steuerinformation auch im zweiten Betriebsmodus zur Verfügung steht, bei dem die Bedieneinheit 3 vom elektrischen Küchengerät 1 abgenommen ist. Bestimmte, insbesondere sicherheitsrelevante Steuerfunktionen sollen nämlich bei abgenommener Bedieneinheit 3, wie bereits oben ausgeführt, gemäß dem vorliegend beschriebenen bevorzugten Ausführungsbeispiel nicht angeboten werden.

Darüber hinaus gibt die zweite Zusatzinformation 16 zu einer jeweiligen Steuerinformation 14 an, ob der damit zusammenhängende Steuerbefehl bei abgenommener Bedieneinheit 3 immer zur Verfügung steht oder nur dann, wenn zwischen der Bedieneinheit 3 und dem elektrischen Küchengerät 1 Sichtkontakt besteht. Eine Überprüfung, ob zwischen dem elektrischen Küchengerät 1 und der Bedieneinheit 3 Sichtkontakt besteht, erfolgt über die Infrarot-Schnittstellen 9 und 11 an der Bedieneinheit 3 bzw. am Küchengerät 1. Die eigentliche Übertragung der Steuerbefehle, die über die Bedieneinheit 3 vom Benutzer eingegeben werden, erfolgt bei von dem elektrischen Küchengerät 1 abgenommener Bedieneinheit 3 über die Funkübertragungseinrichtungen 8, 10 an der Bedieneinheit 3 bzw. am elektrischen Küchengerät 1. Die Infrarot-Übertragung sowie die Funkübertragung sind mit entsprechenden Doppelpfeilen in Fig. 2 dargestellt.

Gemäß dem vorliegend beschriebenen Ausführungsbeispiel der Erfindung wird es dem Benutzer des elektrischen Küchengeräts 1 also ermöglicht, neben einem herkömmlichen Betriebsmodus, bei dem die Bedieneinheit am elektrischen Küchengerät 1 angebracht und damit Teil des elektrischen Küchengeräts 1 ist, auch einen derartigen Betriebsmodus zu wählen, bei dem die Bedieneinheit 3 von dem elektrischen Küchengerät 1 getrennt ist. Wird die Bedieneinheit 3 im zweiten Betriebsmodus im Abstand vom elektrischen Küchengerät 1 positioniert, ist das elektrische Küchengerät 1 mittels der abgenommenen Bedieneinheit 3 aus der Ferne bedienbar. Damit können eine Vielzahl von Vorteilen verbunden sein. Insbesondere kann die Bedieneinheit 3 auf diese Weise unabhängig vom Standort des elektrischen Küchengeräts 1 dort positioniert werden, wo der Benutzer seine Steuerbefehle bevorzugt eingeben will, nämlich z.B. in der Nähe eines Waschbeckens oder auch an dem Platz eines Kochbuchs oder eines Rezeptes.

Gleichwohl gibt es aber auch Situationen, in denen es bevorzugt ist, dass die Bedieneinheit 3 direkt am elektrischen Küchengeräte 1 angeordnet ist, und zwar z.B. dann, wenn bei der Abarbeitung eines Rezeptes eine Phase erreicht worden ist, die besonders überwachungsintensiv oder verarbeitungskritisch ist. Um z.B. den Verarbeitungszustand der Speise kontinuierlich beobachten und überwachen zu können, muss sich der Benutzer in direkter Nähe des elektrischen Küchengeräts 1 aufhalten. Wird also ein entsprechender Schritt bei der Abarbeitung eines Rezeptes erreicht, so ist gemäß dem vorliegend beschriebenen bevorzugten Ausführungsbeispiel der Erfindung vorgesehen, dass eine Ansteuerung über die Bedieneinheit 3 nur dann möglich ist, wenn die Bedieneinheit 3 direkt am elektrischen Küchengerät 1 angebracht und mit diesem über die kabelgebundenen Übertragungseinrichtungen 6, 7 verbunden ist. Auf diese Weise wird der Benutzer gezwungen, sich direkt am elektrischen Küchengerät 1 aufzuhalten.

Insgesamt wird damit gemäß dem vorliegend beschriebenen bevorzugten Ausführungsbeispiel der Erfindung ein universelles System aus einem elektrischen Küchengerät 1 mit einer einzigen Bedieneinheit 3 angegeben, das eine individuelle Anpassung der Bedienung mittels dieser einzigen Bedieneinheit 3 in unterschiedlichen Betriebsmodi ermöglicht, nämlich einerseits direkt an dem elektrischen Küchengerät 1 und andererseits in davon abgenommenem Zustand aus der Ferne mit jeweils unterschiedlichem Funktionsumfang.

### Bezugszeichenliste

- 1: elektrisches Küchengerät
- 2: Verarbeitungsraum
- 3: Bedieneinheit
- 4: Touch-Display
- 5: Druck-/Drehknopf
- 6: kabelgebundene Übertragungseinrichtungen an der Bedieneinheit
- 7: kabelgebundene Übertragungseinrichtungen am Küchengerät
- 8: Funkübertragungseinrichtung an der Bedieneinheit
- 9: Infrarotschnittstelle an der Bedieneinheit
- 10: Funkübertragungseinrichtung am Küchengerät
- 11: Infrarotschnittstelle am Küchengerät
- 12: Speicher
- 13: zentrale Steuereinheit
- 14: Steuerinformationen
- 15: erste Zusatzinformationen
- 16: zweite Zusatzinformationen

## Patentansprüche

1. Elektrisches Küchengerät zur Herstellung von Speisen, mit einer Bedieneinheit (3) zur Eingabe von Steuerbefehlen zum Steuern des elektrischen Küchengeräts (1) durch einen Benutzer, wobei die Bedieneinheit (3) an dem elektrischen Küchengerät (1) lösbar anbringbar und dabei in einem ersten Betriebsmodus und in einem zweiten Betriebsmodus betreibbar ist, wobei die Bedieneinheit (3) zur Eingabe von Steuerbefehlen zum Steuern des elektrischen Küchengeräts (1) durch den Benutzer im ersten Betriebsmodus am elektrischen Küchengerät (1) angebracht und im zweiten Betriebsmodus von dem elektrischen Küchengerät (1) abgenommen ist, **dadurch gekennzeichnet, dass** die Bedieneinheit (3) im ersten Betriebsmodus einen ersten Funktionsumfang von möglichen Eingaben von Steuerbefehlen zum Steuern des elektrischen Küchengeräts (1) und im zweiten Betriebsmodus einen zweiten Funktionsumfang von möglichen Eingaben von Steuerbefehlen zum Steuern des elektrischen Küchengeräts (1) zur Verfügung stellt, wobei der erste Funktionsumfang von dem zweiten Funktionsumfang verschieden ist.

2. Elektrisches Küchengerät nach Anspruch 1, **dadurch gekennzeichnet, dass** der zweite Funktionsumfang wenigstens eine vom ersten Funktionsumfang umfasste mögliche Eingabe von Steuerbefehlen zum Steuern des elektrischen Küchengeräts (1) nicht umfasst.

3. Elektrisches Küchengerät nach Anspruch 1 oder 2, **dadurch gekennzeichnet, dass** der zweite Funktionsumfang abhängig von der Größe oder/und der Art des Abstandes der Bedieneinheit (3) von dem elektrischen Küchengerät (1) ist.

4. Elektrisches Küchengerät nach Anspruch 3, **dadurch gekennzeichnet, dass** der zweite Funktionsumfang in dem Fall geringer ist, in dem zwischen der Betriebseinheit (3) und dem elektrischen Küchengerät (1) keine Sichtverbindung besteht, als in dem Fall, in dem zwischen der Betriebseinheit (3) und dem elektrischen Küchengerät (1) eine Sichtverbindung besteht.

5. Elektrisches Küchengerät nach einem der vorherigen Ansprüche, **dadurch gekennzeichnet, dass** erste Übertragungseinrichtungen (6, 7) und zweite Übertragungseinrichtungen (8, 10) vorgesehen sind, wobei mit den ersten Übertragungseinrichtungen (6, 7) im ersten Betriebsmodus die Steuerbefehle zum Steuern des elektrischen Küchengeräts (1) kabelgebunden zwischen dem elektrischen Küchengerät (1) und der Bedieneinheit (3) übertragbar sind und mit den zweiten Übertragungseinrichtungen (8, 10) im zweiten Betriebsmodus die Steuerbefehle zum Steuern des elektrischen Küchengeräts (1) per Funk zwischen dem elektrischen Küchengerät (1) und der Bedieneinheit (3) übertragbar sind.

6. Elektrisches Küchen gerät nach einem der vorherigen Ansprüche, **dadurch gekennzeichnet, dass** die an dem elektrischen Küchengerät (1) lösbar anbringbare Bedieneinheit (3) die einzige Bedieneinheit des elektrischen Küchengeräts (1) ist.

7. Elektrisches Küchengerät nach einem der vorherigen Ansprüche, **dadurch gekennzeichnet, dass** die Bedieneinheit (3) zusätzlich zur Ausgabe von Informationsdaten an den Benutzer vorgesehen ist.

8. Elektrisches Küchengerät nach einem der vorherigen Ansprüche, **dadurch gekennzeichnet, dass** die Bedieneinheit (3) einen Druck-/Drehknopf (5) und/oder ein Touch-Display (4) zur Eingabe von Steuerbefehlen bzw. zur Ausgabe von Informationsdaten aufweist.

## Claims

1. An electrical kitchen appliance for preparing meals, with an operator control unit (3) for entering control commands for control of the electrical kitchen appliance (1) by the user, wherein the operator control unit (3) can be removably attached to the electrical kitchen appliance (1), and in the process can be operated in a first operating mode and in a second operating mode, wherein the operator control unit (3) for entering control commands for control of the electrical kitchen appliance (1) by the user is attached to the electrical kitchen appliance (1) in the first operating mode and removed from the electrical kitchen appliance (1) in the second operating mode, **characterized in that** the operator control unit (3) provides a first range of functions for possible entries of control commands for control of the electrical kitchen appliance (1) in the first operating mode, and a second range of functions for possible entries of control commands for control of the electrical kitchen appliance (1) in the second operating mode, wherein the first range of functions differs from the second range of functions.

2. The electrical kitchen appliance according to claim 1, **characterized in that** the second range of functions does not encompass at least one possible entry of control commands encompassed by the first range of functions for control of the electrical kitchen appliance (1).

3. The electrical kitchen appliance according to claim 1 or 2, **characterized in that** the second range of functions depends on the size and/or type of distance between the operator control unit (3) and electrical kitchen appliance (1).

4. The electrical kitchen appliance according to claim 3, **characterized in that** the second range of functions is smaller in a case where no visual connection exists between the operator control unit (3) and electrical kitchen appliance (1) than in a case where a visual connection does exist between the operator control unit (3) and electrical kitchen appliance (1).

5. The electrical kitchen appliance according to one of the preceding claims, **characterized in that** first transmission devices (6, 7) and second transmission devices (8, 10) are furnished, wherein the first transmission devices (6, 7) can be used to transfer the control commands for control of the electrical kitchen appliance (1) via a wired connection between the electrical kitchen appliance (1) and operator control unit (3) in the first operating mode, and the second transmission devices (8, 10) can be used to transfer the control commands for control of the electrical kitchen appliance (1) by radio between the electrical kitchen appliance (1) and operator control unit (3) in the second operating mode.

6. The electrical kitchen appliance according to one of the preceding claims, **characterized in that** the operator control unit (3) that can be removably attached to the electrical kitchen appliance (1) is the only operator control unit of the electrical kitchen appliance (1).

7. The electrical kitchen appliance according to one of the preceding claims, **characterized in that** the operator control unit (3) is additionally provided for outputting information data to the user.

8. The electrical kitchen appliance according to one of the preceding claims, **characterized in that** the operator control unit (3) exhibits a push/rotating button (5) and/or a touch display (4) for entering control commands or outputting information data.

## Revendications

1. Appareil de cuisine électrique pour la préparation de plats, avec une unité de commande (3) pour entrer des instructions de commande pour la commande de l'appareil de cuisine électrique (1) par un utilisateur, dans lequel l'unité de commande (3) peut être fixée de manière amovible à l'appareil de cuisine électrique (1) et ce faisant peut fonctionner selon un premier mode de fonctionnement et selon un deuxième mode de fonctionnement, dans lequel l'unité de commande (3), pour introduire des instructions de commande pour la commande de l'appareil de cuisine électrique (1) par l'utilisateur, est dans le premier mode de fonctionnement joint à l'appareil de cuisine électrique (1) et est dans le deuxième mode de fonctionnement séparée de l'appareil de cuisine électrique (1), **caractérisé en ce que** l'unité de commande (3) met à disposition, dans le premier mode de fonctionnement, une première gamme de fonctions pour des entrées possibles d'instructions de commande pour la commande de l'appareil de cuisine électrique (1) et, dans le deuxième mode de fonctionnement, une deuxième gamme de fonctions pour des entrées possibles d'instructions de commande pour la commande de l'appareil de cuisine électrique (1), dans lequel la première gamme de fonctions est différente de la deuxième gamme de fonctions.

2. Appareil de cuisine électrique selon la revendication 1, **caractérisé en ce que** la deuxième gamme de fonctions ne comprend pas au moins une entrée possible d'instructions de commande pour la commande de l'appareil de cuisine électrique qui est comprise dans la première gamme de fonctions.

3. Appareil de cuisine électrique selon la revendication 1 ou 2, **caractérisé en ce que** la deuxième gamme de fonctions est dépendante de la grandeur et/ou du type d'éloignement de l'unité de commande (3) par rapport à l'appareil de cuisine électrique (1).

4. Appareil de cuisine électrique selon la revendication 3, **caractérisé en ce que** la deuxième gamme de fonctions est plus restreinte dans le cas où il n'existe pas de liaison visuelle entre l'unité de commande (3) et l'appareil de cuisine électrique (1) que dans le cas où il existe une liaison visuelle entre l'unité de commande (3) et l'appareil de cuisine électrique (1).

5. Appareil de cuisine électrique selon l'une des revendications précédentes, **caractérisé en ce que** sont prévues des premiers moyens de transmission (6, 7) et des deuxièmes moyens de transmission (8, 10), dans lequel, dans le premier mode de fonctionnement, les instructions de commande pour la commande de l'appareil de cuisine électrique (1) peuvent être transmisses par liaison filaire entre l'appareil de cuisine électrique (1) et l'unité de commande (3) avec les premiers moyens de transmission et, dans le deuxième mode de fonctionnement, les instructions de commande pour la commande de l'appareil de cuisine électrique (1) peuvent être transmisses par liaison radio entre l'appareil de cuisine électrique (1) et l'unité de commande (3) avec les deuxièmes moyens de transmission.

6. Appareil de cuisine électrique selon l'une des revendications précédentes, **caractérisé en ce que** l'unité de commande (3) joignable de manière amovible à l'appareil de cuisine électrique (1) est la seule unité de commande de l'appareil de cuisine électrique.

7. Appareil de cuisine électrique selon l'une des revendications précédentes, **caractérisé en ce que** l'unité de commande (3) est en outre prévue pour fournir des données d'information à l'utilisateur.

8. Appareil de cuisine électrique selon l'une des revendications précédentes, **caractérisé en ce que** l'unité de commande (3) comprend un bouton poussoir/rotatif (5) et/ou un écran tactile (4) pour entrer des instructions de commande ou pour fournir des données d'information.
